# EUROPEAN PATENT APPLICATION

(11) **EP 1 717 812 A1**
(43) Date of publication of application: **02.11.2006**
(21) Application number: 05009222.0
(22) Date of filing: 27.04.2005
(51) Int. Cl.: G11B 33/04

(54) **Optical disc puzzle tray packaging**

(71) Applicant: Sony DADC Austria AG, 5081 Anif (AT)
(72) Inventor: Kronegger, Karl, 4802 Ebensee (AT)
(74) Representative: Müller - Hoffmann & Partner

(57) **Abstract**

The present invention relates to a packaging arrangement for a plurality of disc-shaped media as well as to a corresponding method for packaging a plurality of disc-shaped media. Similarly, the present invention relates to a method for manufacturing a packaging arrangement for a plurality of disc-shaped media. In a preferred embodiment, the present invention provides a packaging arrangement for a plurality of disc-shaped media, comprising a plurality of individually formed tray units, each configured and adapted for at least partially receiving a respective one of the disc-shaped media. The packaging arrangement preferably comprises a mounting board on which two or more of the plurality of tray units are mounted.

## Description

### BACKGROUND OF THE INVENTION

### Field of the invention

The present invention relates to a packaging arrangement for a plurality of disc-shaped media as well as to a corresponding method for manufacturing a packaging arrangement for a plurality of disc-shaped media.

### Description of the related prior art

Methods and arrangements for packaging a plurality of disc-shaped media are well known. EP 0 676 763, for example, discloses a container for a plurality of discs that is capable of storing *e.g.* a plurality of compact discs in a space-saving manner by arranging a first compact disc so as to partially overlap a second compact disc and to be spaced therefrom.

Unfortunately, known methods and arrangements for packaging a plurality of disc-shaped media are plagued by high costs. In particular, current manufacturing and processing techniques for such packaging require that a large number of setup parameters be altered in accordance with the size of the disc-shaped medium to be packaged.

The external dimensions of CDs and DVDs can differ significantly. Similarly, the external dimensions of CD and DVD packaging can differ significantly. Consequently, manufacturing/processing of packaging for various sized disc-shaped media, *e.g*. for both CDs and DVDs, at a single installation does not yield the desired and expected cost-efficiency.

It is an object of the present invention to overcome the disadvantages of the prior art. It is a particular object of the present invention to provide a method and/or arrangement for packaging a plurality of disc-shaped media that permits the plurality of disc-shaped media to be stored in a space-saving manner aesthetically congruent to current packaging of disk-shaped media. It is a further object of the present invention to provide a method and/or arrangement for packaging a plurality of disc-shaped media that permits cost-efficient manufacture and/or processing of such packaging for a wide range of disc-shaped media at a single installation.

Similarly, it is an object of the present invention to provide a method for manufacturing such a packaging arrangement fulfilling the aforementioned objects, *i*.*e*. for manufacturing such a packaging arrangement for a plurality of disc-shaped media.

### SUMMARY OF THE INVENTION

In accordance with the invention, the aforementioned objects are achieved by the packaging arrangement of independent claim 1 as well as by the method for packaging of independent claim 8. Preferred embodiments of the invention are reflected in the dependent claims.

In its broadest aspect, the invention can be seen in a packaging arrangement for a plurality of disc-shaped media, comprising a plurality of individually formed tray units. Since the tray units of the packaging arrangement are formed individually, fewer constraints are placed on their respective form. In particular, the packaging arrangement may be designed such that size and form of the individual tray units is compatible with conventional packaging manufacturer/processing equipment.

The invention can likewise be seen in a corresponding method. While the present description may, for the sake of brevity, limit itself to a description of the packaging arrangement of the invention, the teachings of this specification are to be understood as applying equally to a corresponding packaging method as well as to a corresponding method for manufacturing a packaging arrangement for a plurality of disc-shaped media.

The packaging arrangement of the present invention has been conceived for accommodating a broad range of disc-shaped media. Latter include, but are not limited to, CDs and DVDs such as music CDs, CD-ROMs, CD-Rs, CD-RWs, DVD-ROM and the like.

Preferably, each of the tray units is configured and adapted for at least partially receiving a respective one or more of the plurality of disc-shaped media. For (at least partially) receiving a respective disc-shaped medium, each tray unit is preferably provided with a receiving surface that (at least partially) receives a respective major face of the disc-shaped medium. The receiving surface may be recessed from a major surface of the tray unit and may be delimited *vis-à-vis* said major surface by a curved, *e.g.* circularly arced, region adapted to receive and/or provide positional guidance to an outer circumference of the disc-shaped medium.

Each of the tray units is preferably configured and adapted for receiving one or more disc-shaped media having a preferred radius or a radius is smaller than a preferred maximum radius. The preferred (maximum) radius can be reflected *e.g.* in the size and/or form of the receiving surface of the respective tray unit or in other features thereof.

Each of the tray units is preferably configured and adapted for receiving solely one disc-shaped medium. However, one or more of the tray units may be configured and adapted for receiving a plurality of disc-shaped media, *e.g.* a stacked plurality of disc-shaped media.

Preferably, the tray units of the present invention are formed of plastic as are conventional trays in conventional jewel cases. However, the present invention places no restriction on the materials used in the packaging arrangement, in particular for the tray units, and indeed recognizes that any materials such as plastic, metal, wood, paper, rubber, cardboard, ceramic or glass could be used.

Preferably, one or more of the tray units comprises a fixing mechanism for engaging with a center hole of a respective disc-shaped medium so as to releasably fix latter to the respective tray unit. For example, one or tray units may comprise a circular, spindle-like or hub-like arrangement of resilient elements as known from conventional jewel cases. Similarly, one or more of the tray units may comprise depressions that permit a user's fingers to grasp the disc-shaped medium for removing latter from the tray unit. The fixing mechanism may be configured to engage a plurality of disc-shaped media. For example, such a spindle-like or hub-like arrangement may have a height suitable to receive and engage the center holes of a stack of disc-shaped media. Similarly, one or more tray units, especially a highest "level" or uppermost tray unit (*e.g.* those tray units whose disc-shaped media are fully exposed when all tray units are stocked with disc-shaped media), may be configured to receive a plurality of disc-shaped media in an offset manner.

Preferably, the packaging arrangement comprises at least one mounting element, e.g. a mounting board, on which two or more of said tray units are mounted. This technique allows for a particularly cost-efficient structure of the packaging arrangement. For example, two or three tray units could be glued to a piece of cardboard, one region of which provides support to the tray units and another region of which acts as a cover in the fashion of a book. Similarly, the other region could provide support to further tray units. The use of a mounting element is especially advantageous for loosening the constraints placed on the individual tray units. For example, the individual tray units need not be designed and/or manufactured to interact and need not exhibit the mechanical strength of tray units used without a mounting element. This not only simplifies manufacturer of the tray units, but also advantageously reduces the amount of material required for manufacture of the individual tray units. In this respect, the tray units are preferably designed so as to have minimal height perpendicular to the receiving surface thereof, *i*.*e*. are designed so as to minimize the area of the side walls perpendicular to the receiving surface.

The mounting of the tray units to the mounting element can be carried out in any conventional fashion. The mounting may, for example, make use of glue or adhesive or indeed by melting parts of the surfaces of at least one of the mounting element and the tray units to form a weld. Preferably, the mounting is effected by gluing. The mounting element preferably comprises one or more, preferably planar, mounting surfaces, and the tray units are preferably mounted to the mounting element such that the receiving surface of the respective tray unit is opposite and parallel to a mounting surface of the mounting element. In this respect, each of said tray units preferably has a back side, opposite and preferably parallel to said receiving face, for mounting the respective tray unit to a mounting element, *e.g.* a mounting board, of said packaging arrangement.

As discussed above, the individual tray units need not interact. Preferably, however, two or more of the tray units are configured and adapted to snap or clip together. In this respect, one or more side walls of the tray unit may be provided with suitable snapping or clipping mechanisms as known in the art. Such mutual engagement of tray units can increase the mechanical stability of the packaging arrangement, *i.e*. discourage bending of the packaging arrangement between tray units.

Tray units may be clipped together, for example, by interference fit of the tray units. Alternatively or additionally, a separate clip component, *e.g.* a pin, may be used to hold the tray components together. Accordingly, the tray units may be configured to provide such an interface fit. Similarly, the packaging arrangement may comprise one or more such separate clip components, and the tray units may be configured to appropriate engage with such separate clip components to provide the desired clipping together.

Moreover, *e.g.* for aesthetic reasons, the individual tray units may be designed to interlock or abut like puzzle pieces along side walls thereof. The case where side walls of the tray units abut along a non-linear border particularly discourages bending of the packaging arrangement between the respective tray units. If glued, for example, in an interlocked arrangement to a mounting board, the tray units will strongly resist separation.

As discussed above, the mounting element may be made of any material. Preferably, the mounting element comprises or constitutes a mounting board fabricated from a single sheet of plastic, cardboard or metal. The mechanical loads to which packaging arrangements for a plurality of disc-shaped media are subjected are known in the art. Accordingly, the thickness of the sheet material should be chosen so as to provide the mounting element with sufficient stiffness in conjunction with the tray units and other elements of the packaging arrangement. Similarly, undue thickness of the sheet material would disadvantageously increase material consumption and consequently the costs of the packaging arrangement. When designing the thickness of the mounting element, one must consider that an unduly thin/thick mounting element may yield a packaging arrangement perceived by a user as being unattractively light/heavy. Latter considerations apply *mutatis mutandis* to the design of the tray units as well as to all other elements of the packaging arrangement.

Preferably, a distance between the receiving face and the back side of one or more of the tray units is larger than a distance between the receiving face and the back side of one or more others of said tray units. In other words, each tray unit may be designed so as to receive the disc-shaped medium at a respective one of a plurality of 'levels" *vis-à-vis* its back side. This feature allows the tray units to receive the disc-shaped media at respective 'levels" such that a space-saving, radial overlap of neighboring disc-shaped media analogous to the teachings of EP 0 676 763 can be achieved.

As opposed to the teachings of latter document, the present invention does not mandate that overlapping media do not touch. Indeed, the inventors of the present invention have recognized that the desire for a compact form of the packaging arrangement may outweigh the desire for random accessibility to the media stored therein. In this respect, the inventors of the present invention have moreover determined that contact of the disc-shaped media does not necessarily result in a mutual scratching thereof if the disc-shaped media are appropriately fixed, *i.e*. restrained from relative motion, within the packaging arrangement.

Naturally, the tray units of the present invention may be configured such that overlapping media are spaced, *e.g.* by a distance sufficient to ensure that the overlapping media do not contact one another, even if the packaging arrangement is deformed within the limits to be expected under normal use as for which it was designed.

To minimize the space required to store the plurality of disc-shaped media, the packaging arrangement of the present invention may employ 2, 3, 4 or more "levels" as described above. The tray units are preferably designed and arranged within the packaging arrangement such that the respective centers of the disc-shaped media fall along a line. In this case, the 'levels" of adjacent tray units preferably alternate between a first level and a second level. Similarly, the tray units may be designed and arranged such that the centers of the disc-shaped media form a matrix-like or checkerboard-like pattern. In this case, the respective "level" of the tray unit is preferably chosen from e.g. a binary or tertiary set of levels such that adjacent tray units and/or overlapping disc-shaped media exhibit differing "levels." The person skilled in the art will readily recognize, from the teachings of the present specification, alternative designs and arrangements of the tray units and their respective 'levels' that yield *e.g.* a space-saving or aesthetically appealing design.

Preferably, one or more of the tray units has a footprint, *i*.*e*. a form when viewed (generally) orthogonally to the plane of the receiving surface thereof, whose dimensions do not exceed those of a square having an edge length of *e.g.* 2.8, 2.5 or 2.2 times the maximal radius of disc-shaped media that the respective tray unit is designed to preferably receive.

Conventional packaging arrangements for a single disc-shaped medium typically have a footprint, *i*.*e*. a form when viewed roughly orthogonally to the plane in which the major faces of the disc-shaped medium are designed to be received by the packing arrangement, whose dimensions are roughly on the order of the square having an edge length equal to the diameter of the disc-shaped media that the packaging arrangement is designed to preferably receive. Limiting the size of the individual tray units to a size similar to that of conventional packaging arrangements for single disc-shaped media facilitates application of conventional fabrication and processing equipment to packaging arrangements for a plurality of disc-shaped media. This feature of the present invention is especially advantageous for reducing number of setup parameters that must be altered on the fabrication and/or processing equipment when the production line is switched from packaging arrangements for one size of disc-shaped media to packaging arrangements for another size of disc-shaped media.

Preferably, one or more of the tray units has a footprint whose dimensions do not exceed those of a rectangle having a major edge length of *e.g.* 2.8, 2.5 or 2.2 times the maximal radius of disc-shaped media that the respective tray unit is designed to preferably receive and a minor edge length of *e.g.* 1.4, 1.25 or 1.1 times said maximal radius.

E.g. in the case of two or more tray units designed and arranged so as to receive the respective disc-shaped media in a overlapping manner, the individual tray units may have a footprint whose dimensions do not exceed those of a square having an edge length less than the maximal diameter of disc-shaped media that the respective tray unit is designed to preferably receive. In a 'linear' arrangement of a plurality of tray units, it can be particularly advantageous to employ a tray unit whose footprint is half as "wide" as the footprint of a neighboring tray unit.

As discussed above, each of the tray units preferably comprises a fixing mechanism, *e.g.* an essentially circular fixing mechanism, configured and adapted for engaging with a center hole of a respective disc-shaped medium so as to releasably fix latter to the respective tray unit. In order to permit closer nesting of one or more adjacent tray units, *i.e*. to increase the degree of overlap between the adjacent disc-shaped media, part of one or more of the fixing mechanisms may be cut away/missing.

### BRIEF DESCRIPTION OF THE DRAWINGS

The novel features of the invention, as well as the invention itself, both as to its structure and its operation will be best understood from the accompanying figures, taken in conjunction with the accompanying description. The Figures show:
- Fig. 1: a first tray unit in accordance with a first embodiment of the invention;
- Fig. 2: a second tray unit in accordance with a first embodiment of the invention;
- Fig. 3: a packaging arrangement in accordance with a first embodiment of the invention;
- Fig. 4: a packaging arrangement in accordance with a second embodiment of the invention; and
- Fig. 5: the packaging arrangement of Figure 4 stocked with a plurality of disc-shaped media.

### DESCRIPTION OF THE PREFERRED EMBODIMENTS

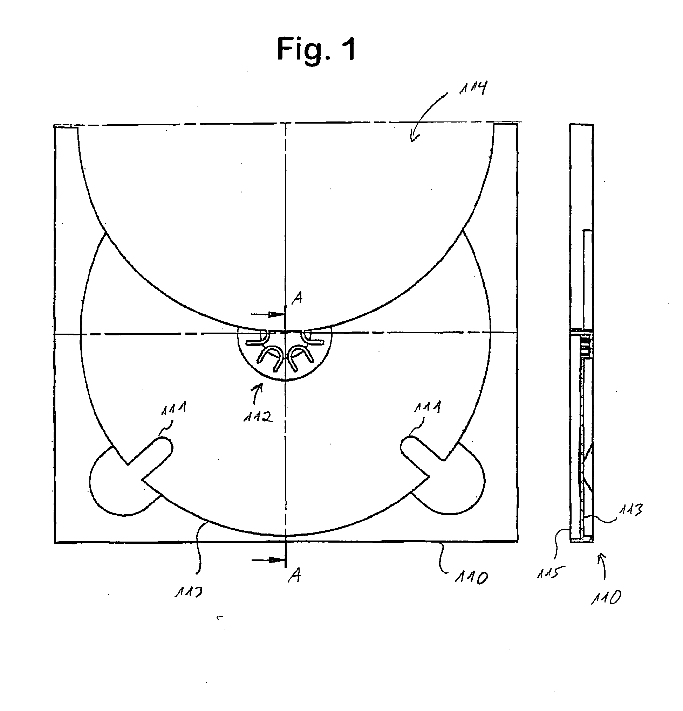

Figure 1 schematically illustrates a first tray unit 110 in accordance with a first embodiment of the invention, wherein the left-hand side of Fig. 1 shows the tray unit 110 from above, *i*.*e*. from a side of tray unit 110 adapted to receive a disc-shaped medium, and the right-hand side of Fig. 1 shows a cross-section of the tray unit 110 along line A-A of Fig. 1.

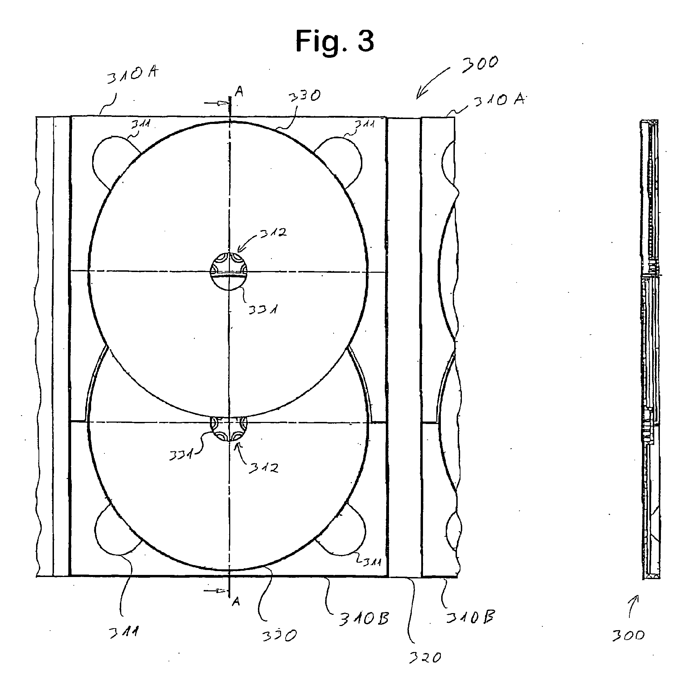

Tray unit 110 comprises a generally circular receiving surface 113 for receiving a major face of a disc-shaped medium. The receiving surface 113 is interrupted by several conventional depressions 111 adjacent to and extending into and under the receiving surface 113 that allow a user to grasp a disc-shaped medium (not shown) held by a conventional fixing mechanism 112 to the receiving surface 113 of the tray unit 110. The receiving surface is also interrupted by a cut-away 114 that allows tray unit 110 to advantageously abut a further tray unit as will be shown in Fig. 3. As shown in Fig. 1. cut-away 114 also cuts away part of fixing mechanism 112 in an unconventional manner. The utility of this cutting-away of part of fixing mechanism 112 will be explained in further detail with regard to Fig. 3.

As shown in the cross-sectional view, receiving surface 113 is opposite and spaced from a back side 115 of tray unit 110, via which tray unit 110 can be affixed/mounted to one or more further elements, *e.g.* a mounting board, of the packaging arrangement. In the shown embodiment, receiving surface 113 is moreover parallel to back side 115.

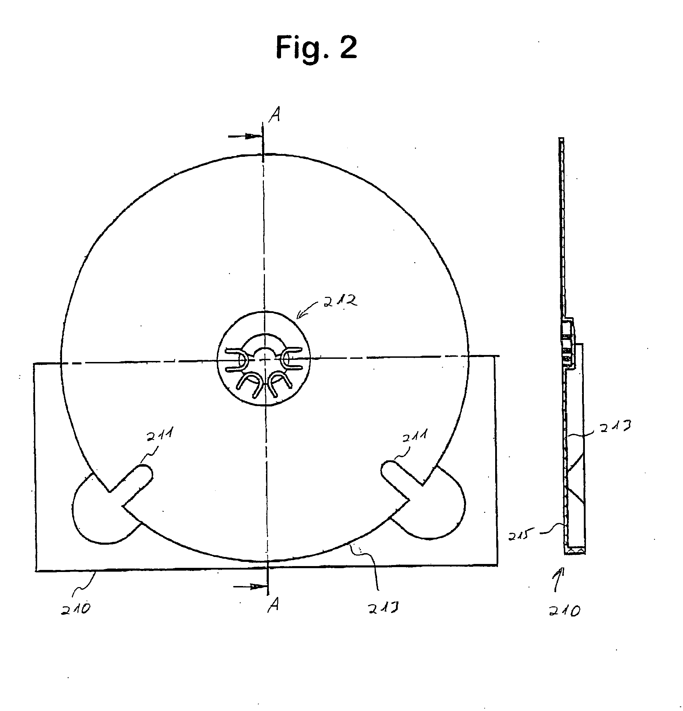

Figure 2 schematically illustrates a second tray unit 210 in accordance with a first embodiment of the invention, wherein the left-hand side of Fig. 2 shows the tray unit 210 from above, *i*.*e*. from a side of tray unit 210 adapted to receive a disc-shaped medium, and the right-hand side of Fig. 2 shows a cross-section of the tray unit 210 along line A-A of Fig. 2.

Similar to tray unit 110, tray unit 210 comprises a generally circular receiving surface 213 for receiving a major face of a disc-shaped medium, which receiving surface 213 is interrupted by several conventional depressions 211 adjacent to and extending into and under the receiving surface 213 that allow a user to grasp a disc-shaped medium (not shown) held by a conventional fixing mechanism 212 to the receiving surface 213 of the tray unit 210. Analogous to the cutting-away of fixing mechanism 112 of tray unit 110 in Fig. 1, part of fixing mechanism 212 of tray unit 210 is likewise cut away. The utility of this cutting-away of part of fixing mechanism 212 will be explained in further detail with regard to Fig. 3.

As shown in the cross-sectional view, receiving surface 213 is immediately opposite a back side 215 of tray unit 210, via which tray unit 210 can be affixed/mounted to one or more further elements, *e.g.* a mounting board, of the packaging arrangement. In other words, receiving surface 213 and back side 215 constitute opposite sides of a sheet-like or board-like region of the material constituting tray unit 210.

Figure 3 schematically illustrates a packaging arrangement 300 in accordance with a first embodiment of the invention, wherein the left-hand side of Fig. 3 shows the packaging arrangement 300 from above, *i*.*e*. from a side of packaging arrangement 300 adapted to receive a plurality of disc-shaped media, and the right-hand side of Fig. 3 shows a cross-section of the packaging arrangement 300 along line A-A of Fig. 3.

Packaging arrangement 300 comprises first tray units 310A whose design corresponds to those of first tray unit 110 shown in Fig. 1 as well as second tray units 310B whose design corresponds to those of second tray unit 210 shown in Fig. 2. The design of first tray units 310A and second tray units 310B is such that a respective one of first tray units 310A and a respective one of second tray units 310B can be placed in mating abutment to one another. In particular, the semi-circular cut-away 114 of first tray unit 110 corresponds to the semi-circular, projecting region of receiving surface 213 of second tray unit 210 in the upper portion of Fig. 2.

First tray units 310A and second tray units 310B comprise depressions 311 as well as fixing mechanisms 312 as described with regard to Fig. 1 and 2 above. First tray units 310A and second straight units 310B are affixed to, *e.g.* glued to, and supported by mounting board 320 having a sheet-like or board-like structure and preferably made of plastic sheet or cardboard. The mounting board 320 can be folded in the (in the Figure: vertically extending) regions to which no tray units 310 are fixed to provide the packaging arrangements 300 with a compact, book-like or pamphlet-like configuration.

In the embodiment shown in Fig. 3, the packaging arrangement 300 has been stocked with disk-shaped media 330 that are held by the respective fixing mechanisms 312 to the respective tray units 310A and 310B that interact with respective center holes 331 in the disk-shaped media 330. As shown in Fig. 3, the cutting-away of part of the respective fixing mechanisms 312 allows a closer nesting of the tray units 310A and 310B, *i.e*. allows a disc-shaped medium 330 to overlap an adjacent disc-shaped medium 330 by more than the smallest radial distance between the center hole 331 and the outer circumference of the respective disc-shaped media 330, even if their respective major faces are closely spaced or touching, *i*.*e*. even if the spacing between their respective major faces does not provide clearance for the respective fixing mechanisms 312.

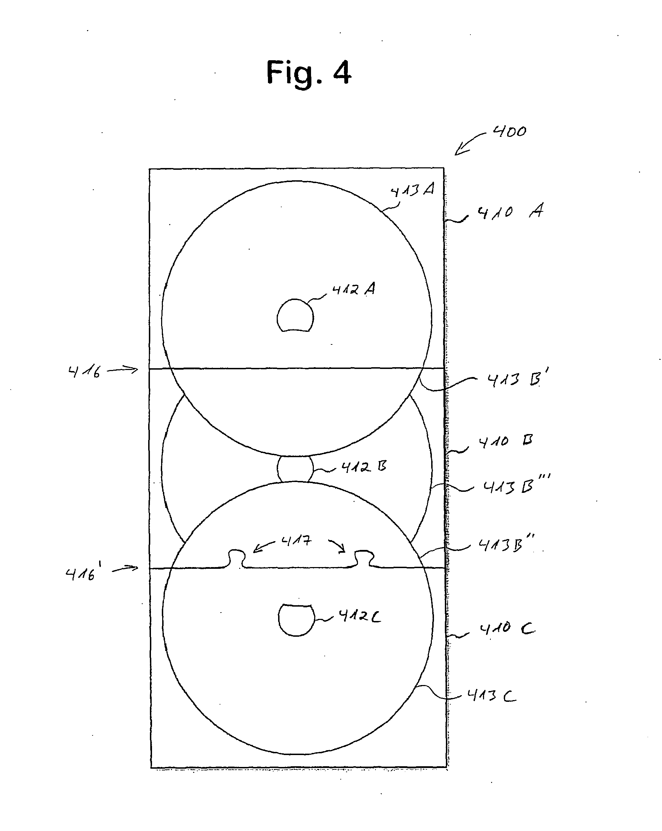

Figure 4 schematically illustrates a top view of a packaging arrangement 400 in accordance with a second embodiment of the invention, *i.e*. a view from a side of packaging arrangement 400 adapted to receive a plurality of disc-shaped media,

In the illustrated embodiment, the packaging arrangement 400 comprises three tray units 410A, 410B and 410C in a linear configuration, *i*.*e*. in a configuration for receiving a plurality of disc-shaped media such that their center holes linearly align. Each of the tray units 410A, 410B, 410C comprises a respective fixing mechanism 412A, 412B and 412C for receiving a center hole of the respective disc-shaped medium for detachably fixing latter to the respective tray unit 410A, 410B, 410C. To enable the packaging arrangement 400 to receive a plurality of disc-shaped media, each of the tray units is moreover provided with one or more receiving surfaces 413. In the illustrated embodiment, receiving surface 413A of tray unit 410A coordinates with receiving surface 413B' of tray unit 410B to receive a disc-shaped medium at a first level and receiving surface 413C of tray unit 410A coordinates with receiving surface 413B''' of tray unit 410B to likewise receive a disc-shaped medium at said first level. Receiving surface 413B" of tray unit 410B, on the other hand, acts alone to receive a disc-shaped medium at a second layer that is more distant from the back side of the tray units 410A-410C than the first level.

As in the first embodiment shown in Fig. 1-3, part of each of the respective fixing mechanisms 412A-412C of tray units 410A-410C of the second embodiment illustrated in Fig. 4 is cut away to allow a closer nesting of the tray units 410A-410C. As opposed to tray units of the first embodiment shown in Fig. 1-3, the tray units of the second embodiment illustrated in Fig. 4 have a generally rectangular shape. Indeed, tray units 410A and 410B are shown in linear abutment along respective, linear side walls 416 thereof. Although not shown, tray units 410A and 410B may be mutually engaged, *e.g.* by means of one or more conventional clipping mechanisms provided in the respective side walls thereof that engage and/or disengage via appropriate relative horizontal motion of tray unit(s) 410A and/or 410B, *i*.*e*. via motion parallel to the plane of receiving surfaces 413. Similarly, any of the tray units 410 may be mutually engaged along non-linear side walls 416 having puzzle-like indentations/projections 417 that can be engaged and/or disengaged via appropriate relative vertical motion of tray unit(s) 410B and/or 410C, *i*.*e*. via motion perpendicular to the plane of receiving surfaces 413.

Tray units 410A-410C are preferably fixed to a supporting element (not shown) of the packaging arrangement 400, *e.g.* to a mounting board thereof, *e.g.* subsequent to or during mutual engagement of the respective tray units 410. Naturally, the respective tray units need not be mutually engaged.

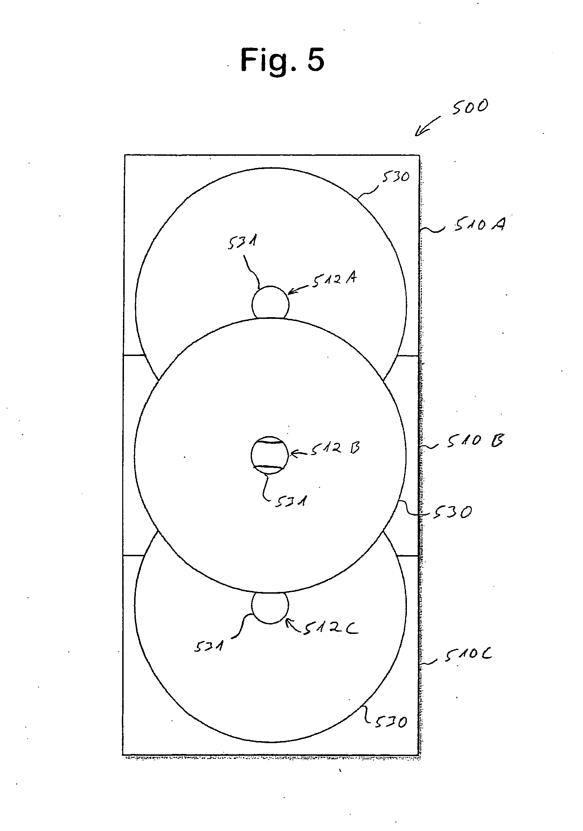

Figure 5, analogous to Fig. 4, schematically illustrates a top view of a packaging arrangement 500 in accordance with a second embodiment of the invention. Accordingly, the packaging arrangement 500 comprises three tray units 510A, 510B and 510C in a linear configuration, *i.e*. in a configuration for receiving a plurality of disc-shaped media 530 such that their center holes 531 linearly align. Each of the tray units 510A, 510B, 510C comprises a respective fixing mechanism 512A, 512B and 512C for receiving a center hole 531 of the respective disc-shaped medium 530 for detachably fixing latter to the respective tray unit 510A, 510B, 510C. Again, part of each of the respective fixing mechanisms 512A-512C is cut away to allow a closer nesting of the tray units 510A-510C.

As opposed to the packaging arrangement 400 of Fig. 4, the packaging arrangement 500 of Fig. 5 is illustrated as being stocked with a plurality of disc-shaped media 530. Fig. 5 consequently exemplifies both the space-saving effects of the present invention (three disc-shaped media can be stored in the space typically required for the packaging of two disc-shaped media without unduly restricting the legibility of information printed on the respective major faces of the disc-shaped media) as well as the overlap that can obstruct removal of those disc-shaped media (*e.g.* the disc-shaped media stocked into tray units 510A and 510C) packaged below other disc-shaped media (*e.g.* the disc-shaped media stocked into tray unit 510B).

In particular, Fig. 4 and 5 exemplify the principle of the present invention, wherein a packaging arrangement for a plurality of disc-shaped media can be fabricated and/or processed, *e.g.* stocked, using conventional fabrication and/or processing equipment designed to produce/handle tray units whose outer dimensions roughly coincide with the dimensions of the disc-shaped media they are designed receive.

Figures 1-5 moreover exemplify the principle of the present invention, wherein the structural strength required of the tray units and consequently the amount of material required to fabricate the tray units is significantly reduced by use of additional structure in the packaging arrangement for supporting the tray units in the desired configuration.

Further information with regard to the terminology used in this specification as well as techniques and hardware employable for implementing the known features of the invention can be found in the documents cited in the bibliography at the end of this specification, the contents of which are incorporated herein by reference.

While the preferred and alternative embodiments of the present invention have been disclosed and described in detail herein, it will be apparent to those skilled in the art that various changes may be made to the configuration, operation and form of the invention without departing from the spirit and scope thereof. In particular, it is noted that the respective features of the invention, even those disclosed solely in combination with other features of the invention, may be combined in any configuration excepting those readily apparent to the person skilled in the art as nonsensical. Likewise, use of the singular and plural is solely indicative of a preference and is not to be interpreted as limiting. Except where the contrary is explicitly noted, the plural may be replaced by the singular and vice-versa.

### BIBLIOGRAPHY

EP 0 676 763
US 5,511,659
DE-U-86 25 285
US 5,322,162

## Claims

1. A packaging arrangement for a plurality of disc-shaped media, comprising:
a plurality of individually formed tray units, each configured and adapted for at least partially receiving a respective one of said disc-shaped media.

2. The packaging arrangement of claim 1, comprising:
a mounting board on which two or more of said plurality of tray units are mounted.

3. The packaging arrangement of claim 1 or 2, wherein
two or more of said tray units are configured and adapted to clip together.

4. The packaging arrangement of any one of the preceding claims, wherein:
each of said tray units has a receiving face for said reception of a respective disc-shaped medium and a back side, opposite said receiving face, for mounting the respective tray unit to a mounting board of said packaging arrangement, and
a distance between said receiving face and said back side of one or more of said tray units is larger than a distance between said receiving face and said back side of one or more others of said tray units

5. The packaging arrangement of any one of the preceding claims, wherein
one or more of said tray units has a footprint whose dimensions do not exceed those of a square having an edge length of 2.5 times the maximal radius of disc-shaped media that the respective tray unit is designed to preferably receive.

6. The packaging arrangement of claim 5, wherein
one or more of said tray units has a footprint whose dimensions do not exceed those of a rectangle having a major edge length of 2.5 times said maximal radius and a minor edge length of 1,25 times said maximal radius.

7. The packaging arrangement of any one of the preceding claims, wherein
each of said tray units comprises an essentially circular fixing mechanism configured and adapted for engaging with a center hole of a respective disc-shaped medium so as to releasably fix latter to the respective tray unit, and
part of one or more of said essentially circular fixing mechanisms is cut away to permit closer nesting of one or more adjacent tray units.

8. A method for manufacturing a packaging arrangement for a plurality of disc-shaped media, comprising the steps of:
forming a plurality of individual tray units, each configured and adapted for at least partially receiving a respective one of said disc-shaped media; and
forming a packaging arrangement comprising said plurality of tray units.

9. The method of claim 8, wherein said step of forming a packaging arrangement comprises the step of mounting two or more of said plurality of tray units on a mounting board

10. The method of claim 8 or 9, wherein said step of forming a packaging arrangement comprises the step of clipping two or more of said tray units together.

11. The method of any one of claims 8-10, wherein said step of forming a plurality of tray units is effected such that:
each of said tray units has a receiving face for said reception of a respective disc-shaped medium and a back side, opposite said receiving face, for mounting the respective tray unit to a mounting board of said packaging arrangement, and
a distance between said receiving face and said back side of one or more of said tray units is larger than a distance between said receiving face and said back side of one or more others of said tray units

12. The method of any one of claims 8-11, wherein said step of forming a plurality of tray units is effected such that:
one or more of said tray units has a footprint whose dimensions do not exceed those of a square having an edge length of 2.5 times the maximal radius of disc-shaped media that the respective tray unit is designed to preferably receive.

13. The method of claim 12, wherein said step of forming a plurality of tray units is effected such that:
one or more of said tray units has a footprint whose dimensions do not exceed those of a rectangle having a major edge length of 2.5 times said maximal radius and a minor edge length of 1,25 times said maximal radius.

14. The method of any one of claims 8-13, wherein said step of forming a plurality of tray units is effected such that:
each of said tray units comprises an essentially circular fixing mechanism configured and adapted for engaging with a center hole of a respective disc-shaped medium so as to releasably fix latter to the respective tray unit, and
part of one or more of said essentially circular fixing mechanisms is cut away to permit closer nesting of one or more adjacent tray units.
